# EUROPÄISCHE PATENTSCHRIFT

(11) **EP 2 242 862 B1**
(45) Veröffentlichungstag und Bekanntmachung des Hinweises auf die Patenterteilung: **31.08.2016**
(21) Anmeldenummer: 08860866.6
(22) Anmeldetag: 17.11.2008
(51) Int. Cl.: C21C 5/52, C21C 7/00, C21C 7/10, C22C 33/04

(54) **VERFAHREN ZUM ERZEUGEN EINER BIS ZU 30% MANGAN ENTHALTENDEN STAHLSCHMELZE**
METHOD FOR PRODUCING A STEEL MELT CONTAINING UP TO 30% OF MANGANESE
PROCÉDÉ DE PRODUCTION D'UN ACIER EN FUSION RENFERMANT JUSQU'À 30% DE MANGANÈSE

(30) Priorität: 14.12.2007 DE 102007061062
(43) Veröffentlichungstag der Anmeldung: 27.10.2010
(73) Patentinhaber: Salzgitter Flachstahl GmbH, 38239 Salzgitter (DE); Peiner Träger GmbH, 31226 Peine (DE)
(72) Erfinder: SPITZER, Karl-Heinz, 38678 Clausthal-Zellerfeld (DE); REDEKER, Christian, 30173 Hannover (DE)
(74) Vertreter: Meissner, Peter E.
(86) Internationale Anmeldenummer: PCT/DE2008/001926
(87) Internationale Veröffentlichungsnummer: WO 2009/076923

(56) Entgegenhaltungen:
- AT-A1- 502 312
- RU-C1- 2 096 491
- RU-C1- 2 208 052
- US-A- 2 076 885
- TOLSTOGUZOV N V ET AL: "Direct alloying of steel with manganese in EAF" STAL, METALLURGIA, MOSCOW, RU, Nr. 1, 1. Januar 1995 (1995-01-01), Seiten 24-27, XP009116637 ISSN: 0038-920X
- ARTUR-KLAUS BOLBRINKER: "Stahlfibel" 1989, VEREIN DEUTSCHER EISENHÜTTENLEUTE , DÜSSELDORF , XP002527641 Seite 56 - Seite 60
- K. Dziggel: "Zuschläge, Schlackenbildner" In: Karl-Heinz Heinen (Ed): "Elektrostahl-Erzeugung", 1997, Verlag Stahleisen GmbH,, Düsseldorf ISBN: 3-514-00446-3 pages 105-111,
- K.-H. Heinen, B.Steffes und H. Zörcher: "Abstichtechniken an Elektrolichtbogenöfen" In: Karl-Heinz Heinen: "Elektrostahl-Erzeugung", 1997, Verlag Stahleisen GmbH, Düsselddorf ISBN: 3-514-00446-3 pages 517-523,
- NOKHRINA O I ET AL: "METALLURGY OF STEEL AND FERROALLOYS DIRECT ALLOYING OF STEEL WITH MANGANESE OXIDE IN AN ARC FURNACE", STEEL IN TRANSLATION, ALLERTON PRESS, NEW YORK, NY, US, vol. 34, no. 2, 1 January 2004 (2004-01-01), pages 21-23, XP001226862, ISSN: 0967-0912
- VAKONECHNYI A Y ET AL: "EFFECTIVENESS OF DIRECT ALLOYING OF STEEL WITH MANGANESE", STEEL IN TRANSLATION, ALLERTON PRESS, NEW YORK, NY, US, vol. 24, no. 1, 1 January 1994 (1994-01-01), pages 5-08, XP000484910, ISSN: 0967-0912

## Beschreibung

Die Erfindung betrifft ein Verfahren zum Erzeugen einer bis zu 30 % Mn enthaltenden Schmelze gemäß Patentanspruch 1.

Betrachtet werden in diesem Zusammenhang Stahlschmelzen, die neben Mn bis zu 5% Si, bis zu 1,5% C, bis zu 22% Al, bis zu 25%Cr, bis zu 30% Ni, sowie je bis zu 5% von Ti, V, Nb, Cu, Sn, Zr, Mo und W sowie je bis zu 1% von N und P enthalten können.

Derartige Stähle werden beispielsweise im Automobilbereich eingesetzt, um der Forderung zur Senkung des Flottenverbrauches unter Beibehaltung eines höchstmöglichen Komforts Rechnung zu tragen. Dabei spielt die Gewichtsersparnis eine entscheidende Rolle. Diesem Wunsch bemühen sich die Lieferanten, insbesondere für den Karosseriebereich, dadurch Rechnung zu tragen, indem sie versuchen durch den Einsatz höherfester Stähle die Wanddicken zu reduzieren, ohne Einbußen bei der Beulsteifigkeit, der Umformung mittels Tief- und/oder Streckziehen und bei der Beschichtung in Kauf nehmen zu müssen.

In der EP 0 889 144 A1 wird ein kaltumformbarer, insbesondere gut tiefziehfähiger austenitischer, Leichtbaustahl vorgeschlagen, der eine Zugfestigkeit bis 1100 MPa aufweist. Die Hauptelemente dieses Stahles sind Si, Al und Mn im Bereich 1 - 6 % Si, 1 bis 8 % Al und 10 bis 30 % Mn, Rest Eisen einschließlich üblicher Stahlbegleitelemente.

Der hohe erreichbare Umformgrad wird durch besondere Effekte, wie etwa TRIP-(Transformation Induced Plasticity), TWIP- (Twinning Induced Plasticity) oder SID-(Shearband Induced Plasticity) Eigenschaften des Stahles erreicht.

Problematisch bei solchen Stählen ist deren metallurgische Erzeugung aufgrund der hohen Gehalte an Legierungselementen.

Aus der DE 101 64 610 C1 ist ein Verfahren zum Erzeugen einer bis zu 30% Mangan enthaltenen Stahlschmelze offenbart, bei dem das Einsatzmaterial z. B. in einem

Induktionsofen zu einer Schmelze aufgeschmolzen wird, wobei die Desoxidation der Einsatzschmelze mit Aluminium derart erfolgt, dass die Sauerstoffabbindung während der gesamten Schmelzendauer durch Aluminium erfolgt und der desoxidierten Schmelze Mangan und Silizium zugegeben wird und die Schmelzbadtemperatur knapp oberhalb der Liquidus-Temperatur gehalten wird. Mit dieser Verfahrensweise soll die Entstehung von braunem Rauch bei der Manganzugabe in die Schmelze verhindert werden.

In der DE 35 02 542.5 ist ein Herstellungsverfahren für einen Stahl mit nicht unter 8 Gew.% Mn offenbart, bei dem ein Elektrolichtbogenofen mit basischem Futter mit Einsatzgut und Schlackenbildnern beschickt wird und danach die Erschmelzung erfolgt.

Wesentlicher Schlackenbildner ist Kalkstein, wobei vor Aufgabe der Schmelze mit Mangan eine Diffusionsoxidation durchgeführt wird. Das Mangan wie auch das Schlackengemisch aus Al2O3, Kalk, einem kohlenstoffhaltigen Stoff, Ferrosilizium und Flussspat werden dabei portionsweise der Schmelze zugegeben. Die endgültige Desoxidation wird mit Aluminium durchgeführt.

Mit dieser Verfahrensroute soll einerseits der Phosphorgehalt in der Schmelze, andererseits der Gesamtgehalt an Mangan(II)- und Eisen(II)-oxid in der Feinungsschlacke verringert werden. Dieses Verfahren ist insbesondere geeignet, um einen hohen Phosphorgehalt in der Schmelze abzusenken.

Die bekannten Herstellungswege zur Erzeugung hochmanganhaltiger Stähle, weisen grundsätzliche Nachteile auf.

Die hohen Legierungsgehalte erfordern bei der Zugabe der die Legierungselemente tragenden Einsatzstoffe zusätzliche Wärmezufuhr zur Schmelze; das Legieren, das üblicherweise in einem Pfannenofen erfolgt, dauert bedingt durch die Gefäßgeometrie und der damit verbundenen geringen Heizleistung recht lange und ist dadurch unwirtschaftlich.

Zudem ist das Legieren im Pfannenofen wegen der großen Mengen an zuzuführenden Einsatzstoffen und Schlackenbildnern und der damit verbundenen geringen Badhöhe bzw. dem geringem Pfannenfüllstand zu Beginn der Behandlung schwierig, unvorteilhaft und unwirtschaftlich.

Ein weiteres Problem besteht darin, dass große Teile des in den Einsatzstoffen enthaltenden Mangans von einer eher sauren oder sauerstoffreichen Schlacke aufgenommen werden kann und für die Herstellung der Schmelze dann nicht mehr verfügbar ist.

Die geringe Manganausbringung, also der Quotient zwischen dem in der hergestellten Schmelze enthaltenden Mangan zu dem in den Einsatzstoffen eingesetzten Mangan, beeinträchtigt zusätzlich die Wirtschaftlichkeit.

Wählt man jedoch eine zu basische Schlacke, kann das Schlackenschäumen über die Zugabe von Kohlenstoff in die Schmelze nicht ausreichend erfolgen.

Die verbreitete Praxis des Schlackenschäumens im Lichtbogenofen erfolgt durch die Bildung von CO/CO2 aus der Reaktion des zugegebenen Kohlenstoffs mit FeO aus der Schlacke. FeO liegt in der basischen Schlacke allerdings nicht in ausreichender Menge vor, da FeO hier besonders gut, beispielsweise durch Silizium aus der Schmelze, reduziert wird. Die Bildung einer Schaumschlacke erhöht aber die Energieeffizienz und schont die Ofenausmauerung.

Zusätzlich kann durch die in den eingesetzten Manganträgern enthaltenden Stoffe die Schlackenviskosität während des Legierungsprozesses ansteigen bis hin zu einem Erstarren der Schlacke.

Die Schlacke kann zudem stark schädigend auf das Futter/Feuerfestmaterial wirken, so dass der Schlackenpfad und das Feuerfestmaterial aufeinander abgestimmt sein müssen.

Der Erfindung liegt die Aufgabe zugrunde, ein Verfahren zum Erzeugen einer bis zu 30% Mangan enthaltenden Stahlschmelze anzugeben, das die vorgenannten Nachteile vermeidet und eine möglichst hohe Wirtschaftlichkeit der Erzeugungsroute ermöglicht.

Diese Aufgabe wird mit den Merkmalen des Anspruches 1 gelöst. Vorteilhafte Weiterbildungen sind Gegenstand von Unteransprüchen.

Nach der Lehre der Erfindung besteht das erfindungsgemäße Verfahren aus den Schritten:
- Bereitstellung und Verwendung eines beheizbaren Gefäßes, welches dazu geeignet ist, in kurzer Zeit große Mengen an Wärme in eine Schmelze bzw. in die zu erschmelzenden Materialien einzubringen mit einer spezifischen Heizleistung von über 200 kW je Tonne produzierter Schmelze oder einer Biotzahl kleiner drei.
- Beschicken des beheizbaren Gefäßes mit einer flüssigen Eisenschmelze oder mit festen Eisen tragenden Einsatzstoffen oder mit einer Kombination aus flüssiger Eisenschmelze und festen Eisen tragenden Einsatzstoffen.
- Zugabe eines Teils oder der Gesamtheit von im Wesentlichen aus CaO, MgO oder entsprechenden Dolomiten bestehenden basischen Schlackenbildnern, wobei abhängig vom geforderten Si-Gehalt und dem Si/Mn-Verhältnis die Zusammensetzung und Menge der Schlackenbildner festgelegt wird.
- Anschließend wahlweise Erschmelzung der festen Eisenträger zu einer niedrig legierten Stahlschmelze mit einer Schlacke.
- Zugabe eines Teils oder der Gesamtheit von Mn und/oder Si enthaltenden Legierungselementträgern.
- Anschließend wahlweise Zugabe weiterer Legierungselementträger.
- Aufheizen und Erschmelzen der Legierungsträger nach oder während des Beschickens, wahlweise gemeinsam mit den chargierten Eisenträgern und den Schlackenbildnern oder in der Schmelze der zuvor geschmolzenen Komponenten.
- Wahlweise Zugabe des restlichen Anteils an Schlackenbildnern und Legierungselementträgern.
- Reduzierung der anfallenden Schlackenmenge durch Zugabe von kohlenstoffarmem SiMn oder SiFeMn mit reduziertem Si-Gehalt und geringen Anteilen an Begleitelementen, wobei das SiMn oder SiFeMn weniger als 10% Si enthält, und die durch die silikothermische Reduktion der Eisen- und Manganoxide unter Bildung von SiO₂ entstehende Wärme zum Erschmelzen des Kalks und des Eisenerzes aufgebracht wird.

Zugabe siliziumhaltiger Einsatzstoffe in Kombination mit Manganerz oder kombinierten Eisen-/Manganerzen, wahlweise durch gleichzeitigen Einsatz oder durch Zugabe der siliziumhaltigen Einsatzstoffe mit zeitgleichem oder anschließendem Heizen und anschließender Zugabe des Manganerzes oder kombinierten Eisen/Manganerzen.
- Einstellen der Schlackenviskosität durch Zugabe von Al2O3, Si02 oder CaF2 enthaltenden Flussmitteln.

Abschließendes Entfernen der Schlacke und Legieren mit Aluminium auf den gewünschten Gehalt.

Der große Vorteil des erfindungsgemäßen Verfahrens besteht darin, dass auch hochmanganhaltige Stähle sehr wirtschaftlich in nur wenigen Prozessschritten erschmolzen werden können.

Der große Vorteil des erfindungsgemäßen Verfahrens besteht darin, dass auch hochmanganhaltige Stähle sehr wirtschaftlich in nur wenigen Prozessschritten erschmolzen werden können.

Durch das Erschmelzen in einem Gefäß mit einer hohen spezifischen Heizleistung von über 200 kW je Tonne produzierter Schmelze, bzw. einer Biotzahl kleiner drei, werden sehr kurze Prozesszeiten realisiert, was zu einer hohen Wirtschaftlichkeit des Verfahrens führt.

Die erfindungsgemäße Prozessroute ist so ausgelegt, dass mit nur einem maximal mit zwei Gefäßen die gesamte Bandbreite chemischer Zusammensetzungen, d. h. Stähle mit beispielsweise bis zu 30 % Mangan, erzeugt werden können.

Dabei werden zum Erschmelzen Öfen mit hohem massenspezifischem Leistungseintrag und gutem Wärmeeintrag in das zu erschmelzende Material, z.B. Elektrolichtbogenöfen, verwendet.

Der Wärmeeintrag in das zu erschmelzende Material wird durch die Biotzahl charakterisiert. Diese dimensionslose Kennzahl ist ein Maß für das Verhältnis vom äußeren Wärmeübergang, d. h. dem Wärmetransport von der erwärmten Grenzfläche der Schmelze zum inneren Wärmeübergang, also der Wärmeleitung in der Schmelze. Sie berechnet sich aus dem Koeffizienten des Produktes vom Wärmeübergangskoeffizient an der Wärmeübertragenden der Grenzfläche und der charakteristischen Länge zur Wärmeleitfähigkeit. Die charakteristische Länge ist für einen Lichtbogenofen oder einen Pfannenofen beispielsweise die Tiefe des Bades.

Durch eine gezielt aufeinander abgestimmte Wahl von Einsatzstoffen und Schlackebildnern wird die Manganausbringung deutlich gesteigert, d. h. die Schlacke nimmt deutlich weniger Mangan auf und es verbleibt mehr Mangan in der Schmelze, was die Wirtschaftlichkeit des Verfahrens nochmals deutlich erhöht.

Über die gezielte Einstellung der Schlackenviskosität während der Erschmelzung über die Zugabe von Flussmitteln wie Al2O3, Si02 und ggf. auch CaF2 wird einem möglichen Absinken der Viskosität bis zur Erstarrung der Schmelze vorteilhaft entgegengewirkt.

Gemäß der erfindungsgemäßen Prozessroute startet die Herstellung entweder mit einer Schmelze aus >95% Eisen, zum Beispiel aus im selbem oder in einem anderen Gefäß erschmolzenem Schrott und/oder mit direktreduziertem Eisen (DRI), FeMn-Erzen, Roheisen oder Rohstahl aus dem Hochofen und ggfs. Konverter oder durch gleichzeitiges Erschmelzen von Eisen tragenden Einsatzstoffen, wie Schrott, DRI und einem Teil oder der Gesamtheit der bei der Erschmelzung verwendeten Einsatzstoffe zum Legieren oder Schlackebildner.

Durch Heizen (Wärmezufuhr) wird anschließend die gewünschte Schmelzbadtemperatur eingestellt und über eine Temperaturkontrolle knapp oberhalb der Liquidustemperatur der jeweiligen als Funktion der Zeit variierenden Legierungszusammensetzung gehalten und/oder die Schlackentemperatur in einem Bereich gehalten in dem insbesondere durch Einstellen einer geeigneten Viskosität ein Schäumen der Schlacke und ein hoher Stoffaustausch mit der Schmelze erreicht werden kann.

Durch die Zugabe von CaCO₃ kann trotz der Verwendung einer basischen Schlacke, ein ausreichendes Schäumen der Schlacke erreicht werden. CaCO₃ liefert außerdem bei der Reaktion zu CaO + CO₂ das für die Schlackenbildung benötigte CaO. Alternativ kann Ca(OH)₂, das CaO und H₂O-Gas bildet, verwendet werden.

Die Zugabe der Legierungselemente erfolgt erfindungsgemäß durch Aufbringen auf die Schlacke, Einblasen mittels Lanze oder durch Einspulen von Fülldraht.

Es ist auch möglich, die Legierungselemente in Form von Pellets oder durch Aufgabe von rieselfähigem Material, z.B. aus Containern, Fässern, Bunkern etc., zuzuführen.

Als vorteilhaft im Hinblick auf einen verringerten Verschleiß der Feuerfestauskleidung des Ofens hat sich die Zugabe von MgO oder MgO-Dolomit erwiesen.

Erfindungsgemäß erfolgt die Einstellung des Si-Gehaltes und des Verhältnisses Si/Mn durch Einstellen der Schlackenzusammensetzung und der Menge der die Basizität steigernden Schlackebildnern, insbesondere durch Zugabe von CaO, Dolomit, MgO o.a.

Hierbei legt das Si/Mn-Verhältnis der Schmelze gewissermaßen die Basizität der Schlacke fest. Setzt man wenig Kalk ein, wird diese Basizität durch von der Schlacke aufgenommenes MnO bewirkt. Bei hoher Kalkzugabe wird entsprechend wenig MnO aufgenommen, so dass die Oxidation durch Bildung von SiO₂ besser abläuft und die Sauerstoffaktivität des Systems sinkt. Entsprechend ist es günstig, eine etwaige Vakuumentkohlung bei niedrigen CaO-Gehalten durchzuführen.

Um die Schlackenmenge gering und die Belegung des verwendeten Gefäßes kurz zu halten wird wahlweise ein besonders hergestellter Manganträger auf der Basis von kohlenstoffarmem SiMn oder SiFeMn mit reduziertem Si-Gehalt und geringen Anteilen an Begleitelementen verwendet. Dazu wird bei der SiMn-Herstellung das flüssige SiMn auf Kalk (CaO) und Manganerz und/oder Eisenerz und ggf. auf Schrott gegossen oder es werden die genannten Einsatzstoffe in den SiMn-Gießstrahl gegeben. Der Schrott dient dabei bedarfsweise zur Kühlung der Schmelze.

Durch die silikothermische Reduktion der Eisen- und Manganoxide unter Bildung von Si02 wird die Wärme zum Erschmelzen des Kalks und des Eisenerzes aufgebracht. Dabei wird das Silizium-Mangan-Verhältnis möglichst so eingestellt, dass bei der Herstellung der Schmelze nach dem Aufschmelzen keine weitere Einstellung des Silizum- und Mangangehaltes mehr erforderlich ist, etwa durch Legieren oder Schlackeneinstellung.

Das so entstandene neuartige Produkt eignet sich besonders zur Herstellung von Schmelzen im Sinne der vorliegenden Erfindung für Stähle mit niedrigen Kohlenstoffgehalten.

Nach abgeschlossener Behandlung, d. h. nach dem Entschlacken, erfolgt das Legieren mit Aluminium entweder im gleichen Gefäß oder in einem separaten Gefäß, wobei das Aluminium in fester oder flüssiger Form zugegeben wird, wodurch, falls dies erforderlich ist, auch die Schmelzentemperatur beeinflusst werden kann.

Bei Verwendung nur eines Gefäßes für die Herstellung der Schmelze kann dieses beispielsweise ein Elektrolichtbogenofen mit entsprechender Heizleistung sein. Durch den Entfall des Umfüllens in andere Gefäße werden besonders kurze Prozesszeiten und damit niedrige Prozesskosten realisiert.

Bei der Verwendung siliziumhaltiger Einsatzstoffe in Kombination mit Manganerz oder kombinierten Eisen/Manganerzen wird durch die exotherme silicotherme Reaktion zwischen dem Silizium in der Schmelze und den Metalloxiden, Eisenoxid und Manganoxid zu Si02 und Eisen/Mangan Wärme in die Schmelze eingetragen, die zum Erschmelzen der Einsatzstoffe verwendet werden kann.

Dadurch geschieht das Aufschmelzen in dem beheizbaren Gefäß schneller oder die Zugabe des Metallerzes kann in einem unbeheizten zweiten Gefäß erfolgen, wodurch die Belegungszeit des beheizten Gefäßes reduziert werden kann.

Im letzten Fall werden ausgehend von einer Startschmelze Manganträger mit geeignetem Kohlenstoffgehalt und hohen Si-Gehalten, wie z. B. SiMn, erschmolzen. Anschließend wird die Schmelze in eine unbeheizte oder mit geringer Heizleistung beheizbare Pfanne umgefüllt und Mn-Erz zur Reduktion des Si unter silicothermischer Reaktion (Wärmeeintrag) zugegeben. Gleichzeitig werden Mn-Träger und basische Schlackenbildner (z. B. CaO) zur Reduzierung des Mn-Gehaltes in der Schlacke und zur Einstellung des Si-Gehaltes in der Schmelze eingebracht.

Dies ist beispielsweise bei der Erzeugung von Stählen mit geforderten niedrigen C-Gehalten von z. B. < 0,3% ein besonderer Vorteil der Erfindung, da im Regelfall auf eine Vakuumentkohlung (VOD - Vacuum Oxygen Degassing) verzichtet werden kann. Falls erforderlich kann jedoch auch eine nachträgliche besonders niedrige Entkohlung über das VOD-Verfahren erreicht werden, wobei die Vakuumbehandlung vorteilhaft durch Bodenspülen mit Sauerstoff erfolgt.

Dabei wird durch Beibehalten der anfallenden relativ sauren (höhere Si02- und MnO-Gehalte , niedriger CaO-Gehalt) und oxidierenden Schlacke bei der anschließende Vakuumbehandlung die Bildung von CO und damit die Entkohlung gefördert. Erst nach der Entkohlung wird die Schlackenbasizität durch Zugabe von CaO erhöht und unter weiterem Si-Abbau der MnO-Gehalt der Schmelze reduziert, was die Mn-Ausbringung weiter verbessert. Falls erforderlich kann der restliche Si-Abbau durch Zugabe von Fe-Erz und CaO zur Schlacke erfolgen.

Die Herstellung der Schmelzen kann mit unterschiedlichen Prozessrouten beispielsweise wie im Folgenden beschrieben erfolgen.

**Beispielroute 1 nicht gemäß der Erfindung**: Herstellung einer Schmelze in einem Elektrolichtbogenofen.
Ziel ist die Herstellung einer Stahlschmelze mit 18% Mn, 0,8% C und 2,3% Si. Die Herstellung erfolgt ausgehend von 100 t einer niedriglegierten Stahlschmelze mit Fe >99%, C =0.1%, Si =1% und Mn =0,25%, die mit 5 t einer Schlacke folgender Zusammensetzung belegt ist: CaO =39%, SiO₂ =45%, FeO =10%, Fe₂O₃ =0,1%, MnO =2%, MnO₂ =0,01%, MgO =2%, Al₂ O₃ =2%.

Zum Einstellen des Mangangehaltes werden zu Beginn des Prozesses 16 t SilicoMangan (SiMn) mit einem Kohlenstoffgehalt von 1,7%, 10 t Ferromangan (FeMn) mit einem Kohlenstoffgehalt von 7% C und eine Tonne Kalk (CaO) in das Schmelzbad eingebracht. Während der Eingabe der Legierungselementträger wird das Bad zeitweise mit dem Lichtbogen geheizt.

Für den beschriebenen Fall erfolgt die Legierungselementzugabe während etwa sieben Minuten, das Heizen mittels Lichtbogen erfolgt während des Legierens für etwa fünf Minuten.

Es ergeben sich etwa 120 t Schmelze mit der Zusammensetzung der Ziellegierung sowie 27 t Schlacke mit einer Zusammensetzung von etwa 48% CaO, 38% SiO₂ und 7% MnO und anderen Bestandteilen.

Die Herstellungszeit von der flüssigen unlegierten Stahlschmelze bis zum Abgießen kann bei dieser Prozessroute weniger als 10 Minuten betragen.

**Beispielroute 2 nicht gemäß der Erfindung**: Herstellung einer Schmelze mit abgesenkten Silizium und Kohlenstoffgehalten in einem Lichtbogenofen und einer Pfanne.
Die Besonderheit der im Folgenden beschriebenen Route besteht darin, dass zur Herstellung einer Legierung mit niedrigem Kohlenstoffgehalt trotz Einsatzes verhältnismäßig kostengünstiger Rohstoffe keine Vakuumbehandlung erfolgt und dass durch Nutzung der silicothermischen Reaktion bei einer kurzen Belegung des Lichtbogenofens ein großer Teil der Legierungsarbeit in einer unbeheizten Pfanne erfolgt.

Ziel ist die Herstellung einer Stahlschmelze mit 18% Mn, 0,1% C und 1,3% Si. Die Herstellung erfolgt ausgehend von 100 t einer niedriglegierten Stahlschmelze mit Fe >99%, C =0,1%, Si =1% und Mn =0,25% die mit 5 t einer Schlacke folgender Zusammensetzung belegt ist: CaO=39%, SiO₂ =45%, FeO =10%, Fe₂ O₃ =0,1%, MnO =2%, MnO2 =0,01%, MgO =2%, Al₂ O₃ =2%.

Zu Beginn des Prozesses werden 20 t SilicoMangan (SiMn) mit einem Kohlenstoffgehalt von 0,3% in einem Zeitintervall von etwa sieben Minuten in das Schmelzbad eingebracht. Anschließend wird die Schmelze mit dem Lichtbogen aufgeheizt bevor sie aus dem Lichtbogenofen in eine Pfanne abgegossen wird. In der Pfanne werden 18 t Manganerz sowie 12 t CaO hinzugegeben.

Trotz der großen Mengen hinzu gegebener und zu erschmelzender Bestandteile sinkt die Temperatur der Schmelze aufgrund der silicothermischen Reaktion zunächst nur gering ab und steigt anschließend sogar über die Ausgangstemperatur an. Durch die basische Wahl der Schlackenzusammensetzung wird die silicothermische Reaktion begünstigt. Daraus ergeben sich etwa 120 t Schmelze mit der Zusammensetzung der Ziellegierung und dem Rest Eisen sowie 33 t Schlacke mit einer Zusammensetzung von etwa unter anderem 41 % CaO, 35% SiO₂ und 20% MnO.

Durch weitere Zugabe von CaO und Manganerz wird der Siliziumgehalt in der Schmelze weiter abgesenkt. Durch weitere Zugabe von CaO alleine wird das Manganausbringen gesteigert, wobei Si als Reduktionsmittel fungiert.

Die Behandlungszeit der Schmelze im Lichtbogenofen beträgt bei dieser Prozessroute knapp 10 Minuten, die Zeit in der Pfanne etwa 25 Minuten.

## Patentansprüche

1. Verfahren zum Erzeugen von einer bis zu 30% Mn enthaltenden Stahlschmelze, welche zusätzlich bis zu 5% Si, bis zu 1,5% C, bis zu 22% Al, bis zu 25%Cr, bis zu 30% Ni, sowie je bis zu 5% von Ti, V, Nb, Cu, Sn, Zr, Mo und W sowie je bis zu 1% von N und P enthalten kann, Rest Eisen sowie unvermeidbare Stahlbegleitelemente mit den Schritten:
- Bereitstellung und Verwendung eines beheizbaren Gefäßes, welches dazu geeignet ist, in kurzer Zeit große Mengen an Wärme in eine Schmelze bzw. in die zu erschmelzenden Materialien einzubringen mit einer spezifische Heizleistung von über 200 kW je Tonne produzierter Schmelze oder einer Biotzahl kleiner drei.
- Beschicken des beheizbaren Gefäßes mit einer flüssigen Eisenschmelze oder mit festen Eisen tragenden Einsatzstoffen oder mit einer Kombination aus flüssiger Eisenschmelze und festen Eisen tragenden Einsatzstoffen.
- Zugabe eines Teils oder der Gesamtheit von im Wesentlichen aus CaO, MgO oder entsprechenden Dolomiten bestehenden basischen Schlackenbildnern, wobei abhängig vom geforderten Si-Gehalt und dem Si/Mn-Verhältnis die Zusammensetzung und Menge der Schlackenbildner festgelegt wird.
- Anschließend wahlweise Erschmelzung der festen Eisenträger zu einer niedrig legierten Stahlschmelze mit einer Schlacke.
- Zugabe eines Teils oder der Gesamtheit von Mn und/oder Si enthaltenden Legierungselementträgern.
- Anschließend wahlweise Zugabe weiterer Legierungselementträger.
- Aufheizen und Erschmelzen der Legierungsträger nach oder während des Beschickens, wahlweise gemeinsam mit den chargierten Eisenträgern und den Schlackenbildnern oder in der Schmelze der zuvor geschmolzenen Komponenten.
- Wahlweise Zugabe des restlichen Anteils an Schlackenbildnern und Legierungselementträgern.
- Reduzierung der anfallenden Schlackenmenge durch Zugabe von kohlenstoffarmem SiMn oder SiFeMn mit reduziertem Si-Gehalt und geringen Anteilen an Begleitelementen, wobei das SiMn oder SiFeMn weniger als 10% Si enthält, und die durch die silikothermische Reduktion der Eisen- und Manganoxide unter Bildung von SO₂ entstehende Wärme zum Erschmelzen des Kalks und des Eisenerzes aufgebracht wird. Zugabe siliziumhaltiger Einsatzstoffe in Kombination mit Manganerz oder kombinierten Eisen-/Manganerzen, wahlweise durch gleichzeitigen Einsatz oder durch Zugabe der siliziumhaltigen Einsatzstoffe mit zeitgleichem oder anschließendem Heizen und anschließender Zugabe des Manganerzes oder kombinierten Eisen/Manganerzen.
- Einstellen der Schlackenviskosität durch Zugabe von Al₂O₃, Si02 oder CaF2 enthaltenden Flussmitteln.
Abschließendes Entfernen der Schlacke und Legieren mit Aluminium auf den gewünschten Gehalt.

2. Verfahren nach Anspruch 1,**dadurch gekennzeichnet, dass** das beheizbare Gefäß ein Elektrolichtbogenofen ist.

3. Verfahren nach Anspruch 1, **dadurch gekennzeichnet,dass** das Legieren mit Manganerz in einem zweiten Gefäß erfolgt.

4. Verfahren nach Anspruch 3, **dadurch gekennzeichnet, dass** das zweite Gefäß wahlweise beheizt wird.

5. Verfahren nach Anspruch 1, **dadurch gekennzeichnet, dass** der flüssige Eisenträger mehr als 95% Eisen enthält.

6. Verfahren nach Anspruch 1 **dadurch gekennzeichnet, dass** der feste Eisenträger aus Schrott und/oder direktreduziertem Eisen besteht.

7. Verfahren nach einem der Ansprüche 1 - 6, **dadurch gekennzeichnet,dass** das auf Schmelztemperatur aufgeheizte Einsatzmaterial knapp oberhalb der Liquidustemperatur der jeweiligen als Funktion der Zeit variierenden Legierungszusammensetzung gehalten wird.

8. Verfahren nach Anspruch 1, **dadurch gekennzeichnet, dass** das Zugeben des restlichen Anteils an Schlackenbildnern und Legierungselementträgern in einem Schritt oder in mehreren zeitlich versetzten Schritten erfolgt.

9. Verfahren nach Anspruch 8, **dadurch gekennzeichnet, dass** das Zugeben des restlichen Anteils an Schlackenbildnern und Legierungselementträgern durch Aufbringen auf die Schlacke erfolgt.

10. Verfahren nach Anspruch 8, **dadurch gekennzeichnet, dass** das Zugeben des restlichen Anteils an Schlackenbildnern und Legierungselementträgern durch Einblasen erfolgt.

11. Verfahren nach Anspruch 8, **dadurch gekennzeichnet, dass** das Zugeben des restlichen Anteils an Schlackenbildnern und Legierungselementträgern in Form von Pellets erfolgt.

12. Verfahren nach Anspruch 8, **dadurch gekennzeichnet, dass** das Zugeben des restlichen Anteils an Schlackenbildnern und Legierungselementträgern in Form von rieselfähigem Material erfolgt.

13. Verfahren nach einem der Ansprüche 1 - 12, **dadurch gekennzeichnet,dass** nach dem Legieren mit Aluminium die Schmelze zur Einstellung des C-Gehaltes vakuumbehandelt wird.

14. Verfahren nach einem der Ansprüche 1 - 13, **dadurch gekennzeichnet, dass** das Mangan in Form von begleitelementarmem SiMn, FeMn oder als metallisches Mn zugegeben wird.

15. Verfahren nach Anspruch 13, **dadurch gekennzeichnet, dass** die Vakuumbehandlung unter Bodenspülen mit Sauerstoff erfolgt (VOD- Behandlung).

16. Verfahren nach Anspruch 13 oder 15, **dadurch gekennzeichnet, dass** die (saure) Schlacke bei der Vakuumbehandlung beibehalten wird.

17. Verfahren nach einem der Ansprüche 1 -16, **dadurch gekennzeichnet, dass** Kalkstein CaCO₃ oder Ca(OH)₂ zugegeben wird.

18. Verfahren nach einem der Ansprüche 1 -17, **dadurch gekennzeichnet, dass** während der Herstellung der Schmelze ein zweites Gefäß verwendet wird.

19. Verfahren nach Anspruch 18, **dadurch gekennzeichnet, dass** das Gefäß beheizbar ist.

## Claims

1. A method for producing a steel melt containing up to 30% Mn, which can additionally contain up to 5% Si, up to 1.5% C, up to 22% Al, up to 25% Cr, up to 30% Ni, as well as up to 5% of each of Ti, V, Nb, Cu, Sn, Zr, Mo and W, as well as up to 1% of each of N and P, with balance iron as well as unavoidable steel-accompanying elements, with the steps of:
- providing and using a heatable vessel which is capable of introducing large quantities of heat within a short period into a melt or into the materials to be smelted, having a specific heat output of more than 200 kW per tonne of produced melt or a Biot number of less than three,
- charging the heatable vessel with a liquid iron melt or with solid iron-carrying charge materials or with a combination of liquid iron melt and solid iron-carrying charge materials,
- adding a portion or the total quantity of basic slag formers consisting substantially of CaO, MgO or corresponding dolomites, the composition and quantity of the slag formers being defined as a function of the required Si content and the Si/Mn ratio,
- then optionally smelting the solid iron carriers to form a low-alloy steel melt with a slag,
- adding a portion or the total quantity of alloying element carriers containing Mn and/or Si,
- then optionally adding further alloying element carriers,
- heating and smelting the alloy carriers after or during charging, optionally together with the charged iron carriers and the slag formers or in the melt of the previously melted components,
- optionally adding the remaining portion of slag formers and alloying element carriers,
- reducing the produced slag quantity by adding low-carbon SiMn or SiFeMn having a reduced Si content and low portions of accompanying elements, wherein the SiMn or SiFeMn contains less than 10% Si and the heat obtained by silicon thermal reduction of iron and manganese oxides with formation of SiO₂ is applied for smelting the lime and iron ore,
- adding silicon-containing charge materials in combination with manganese ore or combined iron/manganese ores, optionally by simultaneous charging or by adding the silicon-containing charge materials with simultaneous or subsequent heating and subsequent addition of the manganese ore or combined iron/manganese ores,
- adjusting slag viscosity by adding flux agents containing Al₂O₃, SiO₂ or CaF₂,
- finally removing the slag and alloying with aluminium to the desired content.

2. The method according to claim 1, **characterised in that** the heatable vessel is an electric arc furnace.

3. The method according to claim 1, **characterised in that** the alloying with manganese ore takes place in a second vessel.

4. The method according to claim 3, **characterised in that** the second vessel is optionally heated.

5. The method according to claim 1, **characterised in that** the liquid iron carrier contains more than 95% iron.

6. The method according to claim 1, wherein the solid iron carrier consists of scrap metal and/or direct-reduced iron.

7. The method according to one of claims 1 - 6, **characterised in that** the charge material heated to melting point is maintained slightly above the liquidus temperature of the respective alloy composition, which composition varies as a function of time.

8. The method according to claim 1, **characterised in that** the remaining portion of slag formers and alloying element carriers is added in one step or in multiple time-staggered steps.

9. The method according to claim 8, **characterised in that** the remaining portion of slag formers and alloying element carriers is added by applying on to the slag.

10. The method according to claim 8, **characterised in that** the remaining portion of slag formers and alloying element carriers is added by blowing in.

11. The method according to claim 8, **characterised in that** the remaining portion of slag formers and alloying element carriers is added in the form of pellets.

12. The method according to claim 8, **characterised in that** the remaining portion of slag formers and alloying element carriers is added in the form of pourable material.

13. The method according to one of claims 1 - 12, **characterised in that**, after alloying with aluminium, the melt is vacuum-treated to adjust the C content.

14. The method according to one of claims 1 - 13, **characterised in that** the manganese is added in the form of low-accompanying-element SiMn, FeMn or as metallic Mn.

15. The method according to claim 13, **characterised in that** the vacuum treatment is performed with bottom purging using oxygen (VOD treatment).

16. The method according to claim 13 or 15, **characterised in that** the (acidic) slag is retained during the vacuum treatment.

17. The method according to one of claims 1 - 16, **characterised in that** limestone CaCO₃ or Ca(OH)₂ is added.

18. The method according to one of claims 1 - 17, **characterised in that** a second vessel is used during production of the melt.

19. The method according to claim 18, **characterised in that** the vessel is heatable.

## Revendications

1. Procédé de production d'un acier fondu contenant jusqu'à 30 % de Mn, qui peut contenir en plus jusqu'à 5 % de Si, jusqu'à 1,5 % de C, jusqu'à 22 % d'Al, jusqu'à 25 % de Cr, jusqu'à 30 % de Ni ainsi que respectivement jusqu'à 5 % de Ti, V, Nb, Cu, Sn, Zr, Mo et W ainsi que respectivement jusqu'à 1 % de N et P, le restant étant du fer ainsi que des inévitables éléments d'accompagnement de l'acier, avec les étapes suivantes :
- fourniture et utilisation d'un récipient pouvant être chauffé, qui est approprié pour, en un temps court, introduire de grandes quantités de chaleur dans une masse fondue ou respectivement dans les matériaux à faire fondre avec une puissance de chauffe spécifique supérieure à 200 kW par tonne de masse fondue produite ou un nombre de Biot inférieur à trois,
- alimentation du récipient pouvant être chauffé avec du fer fondu liquide ou avec des matières de charge portant du fer solide ou avec une combinaison de fer fondu liquide et de matières de charge portant du fer solide,
- addition d'une partie ou de la totalité de fondants de scorification basiques composés essentiellement de CaO, MgO ou de dolomites correspondantes, où la composition et la quantité des fondants de scorification sont établies en fonction de la teneur en Si exigée et du rapport Si/Mn,
- ensuite, de façon facultative, fusion des porteurs de fer solides pour donner un acier fondu faiblement allié avec un laitier,
- addition d'une partie et de la totalité de porteurs d'éléments d'alliage contenant Mn et/ou Si,
- ensuite, de façon facultative, addition d'autres porteurs d'éléments d'alliage,
- chauffage et fusion des porteurs d'alliage après ou pendant l'alimentation, de façon facultative en commun avec les porteurs de fer chargés et les fondants de scorification ou dans la masse fondue des composants fondus auparavant,
- de façon facultative, addition de la fraction restante de fondants de scorification et de porteurs d'éléments d'alliage,
- réduction de la quantité de laitier présente par addition de SiMn ou de SiFeMn pauvre en carbone, avec une teneur en Si réduite et de faibles fractions d'éléments d'accompagnement, où le SiMn ou le SiFeMn contient moins de 10 % de Si, et la chaleur créée par la réduction silicothermique des oxydes de fer et de manganèse avec formation de SiO₂ est appliquée pour faire fondre la chaux et le minerai de fer,
- addition de matières de charge contenant du silicium en combinaison avec du minerai de manganèse ou des minerais de fer/manganèse combinés, de façon facultative par l'utilisation simultanée ou par l'addition des matières de charge contenant du silicium avec chauffage simultané ou ultérieur et ensuite addition du minerai de manganèse ou des minerais de fer/manganèse combinés,
- réglage de la viscosité du laitier par addition de fondants contenant Al₂O₃, SiO₂ ou CaF₂,
- pour finir, enlèvement du laitier et alliage avec de l'aluminium à la teneur souhaitée.

2. Procédé selon la revendication 1, **caractérisé en ce que** le récipient pouvant être chauffé est un four à arc électrique.

3. Procédé selon la revendication 1, **caractérisé en ce que** l'alliage avec le minerai de manganèse s'effectue dans un deuxième récipient.

4. Procédé selon la revendication 3, **caractérisé en ce que** le deuxième récipient est chauffé de façon facultative.

5. Procédé selon la revendication 1, **caractérisé en ce que** le porteur de fer liquide contient plus de 95 % de fer.

6. Procédé selon la revendication 1, **caractérisé en ce que** le porteur de fer solide se compose de ferrailles et/ou de fer réduit directement.

7. Procédé selon l'une des revendications 1-6, **caractérisé en ce que** le matériau de charge chauffé à la température de fusion est maintenu un peu au-dessus de la température de liquidus de la composition d'alliage respective qui varie en fonction de la durée.

8. Procédé selon la revendication 1, **caractérisé en ce que** l'addition de la fraction restante de fondants de scorification et de porteurs d'éléments d'alliage s'effectue en une étape ou en plusieurs étapes décalées dans le temps.

9. Procédé selon la revendication 8, **caractérisé en ce que** l'addition de la fraction restante de fondants de scorification et de porteurs d'éléments d'alliage s'effectue par application sur le laitier.

10. Procédé selon la revendication 8, **caractérisé en ce que** l'addition de la fraction restante de fondants de scorification et de porteurs d'éléments d'alliage s'effectue par insufflation.

11. Procédé selon la revendication 8, **caractérisé en ce que** l'addition de la fraction restante de fondants de scorification et de porteurs d'éléments d'alliage s'effectue sous forme de granulés.

12. Procédé selon la revendication 8, **caractérisé en ce que** l'addition de la fraction restante de fondants de scorification et de porteurs d'éléments d'alliage s'effectue sous forme de matériau capable de s'écouler.

13. Procédé selon l'une des revendications 1-12, **caractérisé en ce que**, après l'alliage avec l'aluminium, la matière fondue est traitée par le vide pour le réglage de la teneur en C.

14. Procédé selon l'une des revendications 1-13, **caractérisé en ce que** le manganèse est ajouté sous forme de SiMn pauvre en éléments d'accompagnement, de FeMn ou en tant que Mn métallique.

15. Procédé selon la revendication 13, **caractérisé en ce que** le traitement par le vide s'effectue avec un balayage d'oxygène à partir du fond (traitement VOD).

16. Procédé selon la revendication 13 ou 15, **caractérisé en ce que** le laitier (acide) est conservé lors du traitement par le vide.

17. Procédé selon l'une des revendications 1-16, **caractérisé en ce que** du calcaire CaCO₃ ou Ca(OH)₂ est ajouté.

18. Procédé selon l'une des revendications 1-17, **caractérisé en ce qu'**un deuxième récipient est utilisé pendant la production de la masse fondue.

19. Procédé selon la revendication 18, **caractérisé en ce que** le récipient peut être chauffé.
